# FASCICULE DE BREVET EUROPEEN

(11) **EP 3 178 252 B1**
(45) Date de publication et mention de la délivrance du brevet: **21.09.2022**
(21) Numéro de dépôt: 15736553.7
(22) Date de dépôt: 16.06.2015
(51) Int. Cl.: H04W 28/02, H04N 7/15, H04W 36/00, H04W 8/04, H04W 8/18, H04W 68/12, H04L 65/1016, H04L 65/1063, H04L 65/1069, H04L 65/1073

(54) **TRAITEMENT DE MESSAGES DE SIGNALISATION AU SEIN D'UN SYSTÈME COMPRENANT PLUSIEURS COEURS DE RÉSEAU**
VERARBEITUNG VON SIGNALISIERUNGSNACHRICHTEN IN EINEM SYSTEM MIT MEHREREN KERNNETZWERKEN
PROCESSING OF SIGNALLING MESSAGES IN A SYSTEM COMPRISING SEVERAL CORE NETWORKS

(30) Priorité: 17.06.2014 FR 1455525
(43) Date de publication de la demande: 14.06.2017
(73) Titulaire: Orange, 92130 Issy-les-Moulineaux (FR)
(72) Inventeur: LE SAGE, Benoît, 92120 Montrouge (FR); FREMOND, Philippe, 75013 Paris (FR); LABRANCHE, Miguel, 94380 Bonneuil Sur Mane (FR)
(86) Numéro de dépôt international: PCT/FR2015/051595
(87) Numéro de publication internationale: WO 2015/193608

(56) Documents cités:
- EP-A1- 2 709 410
- WO-A1-2010/006636
- US-A1- 2007 155 386

## Description

L'invention se rapporte au domaine général des télécommunications.

Elle concerne plus particulièrement la gestion de l'accès à des services multimédias communs à plusieurs cœurs de réseau, pour un utilisateur équipé d'un terminal fixe ou mobile.

Le standard IMS (IP Multimedia Subsystem) propose une architecture tout IP (Internet Protocol) pour mettre en œuvre des services multimédia tels que par exemple des services de voix sur IP ou des services de visioconférence sur IP.

Cette architecture est une architecture modulaire au sein d'un coeur de réseau. Elle fournit des fonctionnalités de services (« services enablers » en anglais) qui peuvent être utilisées par les différents services mis en œuvre pour un ensemble de terminaux enregistrés auprès de ce cœur de réseau.

Un exemple de telles fonctions est par exemple le transfert de communication.

Cette architecture a dans un premier temps été développée dans le domaine des réseaux fixes. Puis, avec l'arrivée de la technologie VoLTE (Voice over Long Term Evolution), elle est apparue dans le domaine des réseaux mobiles.

Actuellement, cette architecture est mise en place pour un ensemble de terminaux fixes, par exemple les terminaux d'un opérateur, ou pour un ensemble de terminaux mobiles.

En d'autres termes, un IMS proposant un premier ensemble de services multimédia pour un parc de terminaux fixes et un IMS proposant un deuxième ensemble de services multimédia pour un parc de terminaux mobiles coexistent.

Cet environnement multi-IMS induit un cloisonnement des services rendus par réseau IMS et par familles d'accès, fixes ou mobiles, pour les abonnés. Le document WO2010/006636 décrit un système dans lequel un utilisateur change de réseau d'accès.

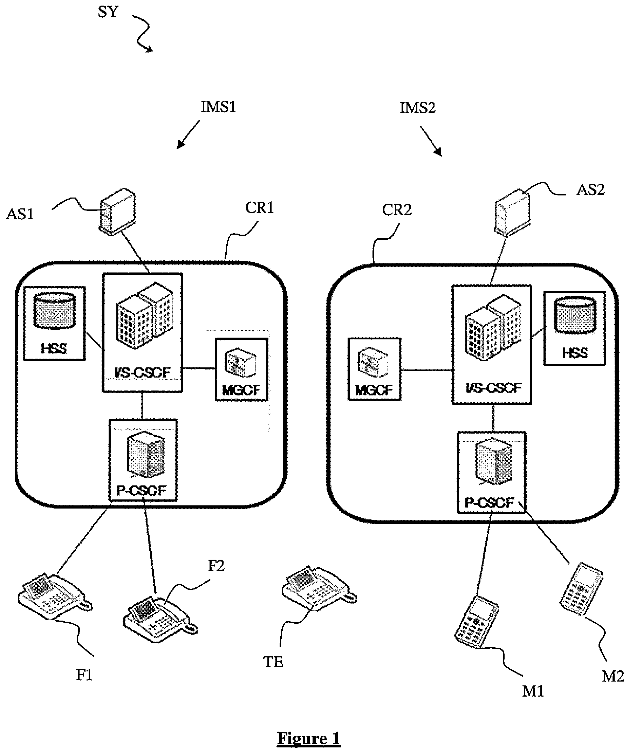

La figure 1 représente un exemple de système de l'état de l'art SY comportant un premier réseau IMS1 et un deuxième réseau IMS2.

Le premier réseau IMS1 comporte une pluralité de dispositifs formant un premier cœur de réseau CR1, un serveur d'application AS1 et une pluralité P1 de terminaux F1, F2... enregistrés auprès du cœur de réseau CR1. Les terminaux F1, F2...de la pluralité P1 sont par exemple des terminaux fixes.

Il est supposé que des informations relatives au profil de chaque utilisateur d'un terminal de la pluralité P1 sont enregistrées au sein du premier cœur de réseau CR1 et accessibles par le serveur d'application AS1 de ce réseau.

Le serveur d'application AS1 est apte à fournir des fonctionnalités de service prédéfinies pour le premier réseau IMS1 aux utilisateurs des terminaux de la pluralité P1 en fonction des informations de profil enregistrées.

Le deuxième réseau IMS2 comporte une pluralité de dispositifs formant un deuxième cœur de réseau CR2, un serveur d'application AS2 et une pluralité P2 de terminaux M1, M2... enregistrés auprès du cœur de réseau CR2. Les terminaux M1, M2...de la pluralité P2 sont par exemple des terminaux mobiles.

Il est supposé que des informations relatives au profil de chaque utilisateur d'un terminal de la pluralité P2 sont enregistrées au sein du deuxième cœur de réseau et accessibles par le serveur d'application AS2.

Le serveur d'application AS2 est apte à fournir des fonctionnalités de service prédéfinies pour le deuxième réseau IMS2 aux utilisateurs des terminaux de la pluralité P2.

Dans cette architecture, le premier et le deuxième serveur d'application n'interagissent pas directement entre eux.

Afin que des fonctionnalités de service identiques soient rendues par chaque cœur de réseau, il est nécessaire que des informations similaires soient enregistrées d'une part au sein du premier réseau et d'autre part au sein du deuxième réseau.

Par exemple, dans le cadre d'un service de communication de type voix sur IP, une fonctionnalité de service mise en œuvre est par exemple un service de sonnerie simultanée sur plusieurs terminaux.

On suppose par exemple que suite à une demande d'un utilisateur U du terminal F1 pour bénéficier de ce service pour une sonnerie simultanée sur le terminal fixe F1 enregistré auprès du premier cœur de réseau CR1 et sur un terminal M1 enregistré auprès du deuxième cœur de réseau CR2, un identifiant du terminal M1 a été enregistré dans le profil de l'utilisateur U au niveau du premier cœur de réseau CR1.

Pour que cette fonctionnalité de service soit également rendue par le deuxième cœur de réseau CR2 pour cet utilisateur U, des informations similaires doivent également être enregistrées au sein du deuxième cœur de réseau.

Par exemple, un identifiant du terminal F1 a été enregistré dans le profil de l'utilisateur U.

Ce double enregistrement est couteux en termes de temps de saisie et de ressources de stockage.

De plus, cette architecture peut engendrer des cas de génération de boucles d'appels entre les deux réseaux.

Par exemple, lorsqu'un appel provenant d'un terminal TE extérieur au réseau, à destination d'un terminal du premier réseau IMS1, par exemple le terminal F1, est reçu au niveau du premier cœur de réseau, un message de signalisation est transmis au serveur d'application AS1 associé à ce cœur CR1 qui déclenche la logique de service enregistrée pour l'interlocuteur appelé U.

Le serveur d'application AS1 renvoie en retour via le premier cœur de réseau CR1, un message de signalisation d'établissement d'appel à destination du terminal mobile M1. Ce message est reçu par le deuxième cœur de réseau CR2, qui à son tour s'adresse au serveur d'application AS2 qui lui est associé.

Le serveur d'application AS2 déclenche la logique de service enregistrée pour l'utilisateur U et renvoie en retour via le deuxième cœur de réseau CR2, un message de signalisation d'établissement d'appel à destination du terminal fixe. Ce message est reçu par le premier cœur de réseau CR1, qui de nouveau s'adresse au serveur d'application AS1 qui lui est associé...

Un des buts de l'invention est de remédier à des insuffisances/inconvénients de l'état de la technique et/ou d'y apporter des améliorations.

A cette fin, l'invention propose un procédé de traitement relatif à une communication, mis en œuvre par un serveur d'application apte à émettre et à recevoir des messages de signalisation via une première liaison de communication établie entre ledit serveur d'application et un premier ensemble de dispositifs formant un premier cœur de réseau.

Ce procédé de traitement comprend les étapes suivantes :
- réception, via la première liaison de communication, d'un premier message de signalisation ;
- obtention, en fonction dudit premier message de signalisation reçu, d'un deuxième message de signalisation comportant un identifiant d'un terminal destinataire dudit deuxième message;
- analyse pour déterminer, en fonction dudit identifiant de terminal destinataire, si ledit terminal destinataire est connecté à un deuxième cœur de réseau d'un groupe prédéfini de cœurs de réseau, ledit deuxième cœur de réseau étant différent dudit premier cœur de réseau;
- en cas de détermination positive, transmission dudit deuxième message de signalisation via une deuxième liaison de communication établie entre ledit serveur d'application et un deuxième ensemble de dispositifs formant ledit deuxième cœur de réseau.

Le procédé de traitement permet ainsi d'utiliser un seul serveur d'application pour plusieurs cœurs de réseau.

Chaque cœur de réseau est relié au serveur d'application via une liaison de communication permettant aux deux entités d'échanger des messages de signalisation relatif à une communication établie ou en cours d'établissement. Un identifiant du terminal destinataire contenu dans un message de signalisation obtenu par le serveur d'application permet au serveur d'application d'identifier le cœur de réseau auquel est connecté ledit terminal destinataire, et en conséquence de choisir la liaison de communication à utiliser pour transmettre ledit message.

Le traitement des messages de signalisation par un seul serveur d'application permet de coordonner les services rendus par chaque cœur de réseau.

De plus, les informations nécessaires à la mise en œuvre des services sont saisies une seule fois.

Selon une caractéristique particulière du procédé de traitement, ledit identifiant de terminal destinataire comporte un identifiant du deuxième cœur de réseau.

L'analyse de l'identifiant permet de déterminer de façon rapide, simple et sûre quel est le cœur de réseau auquel est connecté le terminal destinataire.

Selon un mode de réalisation particulier du procédé de traitement, lors de l'étape de transmission, ledit deuxième message de signalisation est transmis à un dispositif dudit deuxième ensemble de dispositifs, une adresse dudit dispositif étant préalablement enregistrée en association avec ledit identifiant de terminal destinataire.

Pour chaque cœur de réseau d'un ensemble d'au moins deux cœurs de réseau, au moins une adresse est préalablement enregistrée. Une dite adresse est celle d'un dispositif du cœur de réseau considéré.

L'identifiant de terminal destinataire contenu dans le deuxième message de signalisation permet de déterminer le cœur de réseau auquel est relié ce terminal. Une adresse du cœur de réseau considéré préalablement enregistrée est ensuite utilisée pour adresser directement un dispositif de ce cœur de réseau apte à transmettre le message au terminal destinataire, directement ou par l'intermédiaire d'un ou plusieurs autres dispositifs de ce cœur de réseau.

L'enregistrement préalable d'une adresse en association avec un identifiant du terminal destinataire permet au serveur d'application de transmettre le deuxième message de signalisation à une entité prédéfinie du deuxième cœur de réseau. Le traitement du deuxième message de signalisation est ainsi facilité.

Selon une caractéristique particulière du procédé de traitement, ladite adresse est enregistrée par ledit serveur d'application suite à la réception d'un message d'enregistrement transmis préalablement par ledit terminal destinataire.

Un cœur de réseau comprend généralement plusieurs dispositifs aptes à communiquer directement avec le serveur d'application via une liaison de communication établie entre le cœur de réseau et le serveur d'application. Le dispositif auquel est relié un terminal varie d'une connexion à une autre.

La transmission au serveur d'application d'une adresse du dispositif auquel le terminal est connecté permet d'informer le serveur, en mode dynamique, des terminaux connectés et du dispositif, typiquement un serveur, auquel est relié le terminal.

Lorsque le serveur d'application a un message de signalisation à transmettre à un terminal, il peut ainsi adresser directement ce message au dispositif auquel le terminal est raccordé. Cette transmission directe permet une meilleure circulation des messages de signalisation entre le serveur d'application et les cœurs de réseaux.

Selon un mode de réalisation particulier du procédé de traitement, ledit deuxième message de signalisation transmis lors de ladite étape de transmission comporte un indicateur de traitement signalant que ledit deuxième message a été traité par ledit serveur d'application.

Dans un fonctionnement classique, un dispositif recevant un message de signalisation transmet ce message au serveur d'application auquel il est relié et attend un message de retour avant de transférer le message au terminal. L'indicateur de traitement est un moyen simple pour informer le dispositif que le message ayant déjà été traité par le serveur d'application, le dispositif peut le transmettre directement au terminal destinataire.

Selon une caractéristique particulière du procédé de traitement, ledit deuxième message est ledit premier message.

Selon une autre caractéristique particulière du procédé de traitement, ledit deuxième message est déterminé en fonction d'un identifiant de terminal contenu dans ledit premier message de signalisation et en fonction de données de service préalablement enregistrées en association avec un identifiant d'utilisateur dudit terminal.

Le procédé s'applique ainsi aussi bien aux messages émis par un cœur de réseau, par exemple lors d'une demande d'établissement d'une communication provenant d'un terminal, qu'aux messages déterminés par le serveur d'application pour mettre en œuvre une fonctionnalité de service relative à une communication en cours d'établissement ou une communication établie.

Il permet ainsi de faciliter le traitement des messages de signalisation entre plusieurs cœurs de réseau.

L'invention se rapporte également à un procédé de gestion d'un message de signalisation relatif à une communication entre deux utilisateurs, mis en œuvre par un serveur d'un ensemble de dispositifs formant un deuxième cœur de réseau.

Ce procédé de gestion comprend les étapes suivantes :
- réception, via une deuxième liaison de communication établie entre un serveur d'application et ledit serveur, d'un deuxième message de signalisation comportant un identifiant de terminal destinataire dudit message, ledit deuxième message ayant été obtenu par ledit serveur d'application en fonction d'un premier message de signalisation reçu par ledit serveur d'application via une première liaison de communication établie entre ledit serveur d'application et un premier ensemble de dispositifs formant un premier cœur de réseau ;
- transmission dudit deuxième message à destination dudit deuxième terminal.

Selon une caractéristique du procédé de gestion, ledit deuxième message de signalisation comporte un indicateur de traitement signalant que ledit message a été traité par ledit serveur d'application.

L'invention se rapporte également à un serveur d'application comportant un premier module de communication pour émettre et recevoir des messages de signalisation relatifs à une communication entre deux utilisateurs, via une première liaison de communication établie entre ledit serveur d'application et un premier ensemble de dispositifs formant un premier cœur de réseau.

Ce serveur d'application comprend également :
- un module d'obtention, en fonction d'un premier message de signalisation reçu via la première liaison de communication, d'un deuxième message de signalisation comportant un identifiant d'un terminal destinataire dudit deuxième message;
- un module d'analyse pour déterminer, en fonction dudit identifiant de terminal destinataire, si ledit terminal destinataire est connecté à un deuxième cœur de réseau d'un groupe prédéfini de cœurs de réseau, ledit deuxième cœur de réseau étant différent dudit premier cœur de réseau;
- un deuxième module de communication pour transmettre, en cas de détermination positive, ledit deuxième message de signalisation via une deuxième liaison de communication établie entre ledit serveur d'application et un deuxième ensemble de dispositifs formant ledit deuxième cœur de réseau.

L'invention se rapporte encore à un serveur d'un ensemble de dispositifs formant un deuxième cœur de réseau, le serveur comprenant:
- un module de réception, via une deuxième liaison de communication établie entre un serveur d'application et ledit serveur, d'un deuxième message de signalisation relatif à une communication et comportant un identifiant de terminal destinataire dudit message, ledit message ayant été obtenu par ledit serveur d'application en fonction d'un premier message de signalisation reçu par ledit serveur d'application via une première liaison de communication établie entre ledit serveur d'application et un premier ensemble de dispositifs formant un premier cœur de réseau.
- un module de transmission dudit deuxième message à destination dudit deuxième terminal.

Selon une implémentation préférée, les différentes étapes du procédé selon l'invention sont mises en œuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé de traitement relatif à une communication, respectivement un procédé de gestion. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en œuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante d'un mode de réalisation donné à titre d'exemple non limitatif, en référence aux dessins annexés, dans lesquels :
- la figure 1 est un schéma illustrant un système de l'état de l'art,
- la figure 2 est un schéma illustrant un système selon un premier mode de réalisation,
- la figure 3 est un organigramme illustrant les différentes étapes d'un procédé de traitement et d'un procédé de gestion selon un premier mode de réalisation de l'invention,
- la figure 4a est un tableau illustrant un contenu d'une base de données après une phase d'inscription d'un utilisateur,
- la figure 4b est un tableau illustrant un contenu d'une base de données après une phase de connexion d'un terminal,
- la figure 5 est un schéma illustrant le trajet de messages de signalisation selon un premier exemple de mise en œuvre de l'invention,
- la figure 6 est un schéma illustrant le trajet de messages de signalisation selon un deuxième exemple de mise en œuvre de l'invention,
- la figure 7 est un schéma illustrant le trajet de messages de signalisation selon un troisième exemple de mise en œuvre de l'invention,
- la figure 8 est un schéma illustrant un dispositif apte à réaliser les étapes d'un procédé de traitement selon un mode de réalisation de l'invention,
- la figure 9 est un schéma illustrant un dispositif apte à réaliser les étapes d'un procédé de gestion selon un mode de réalisation de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

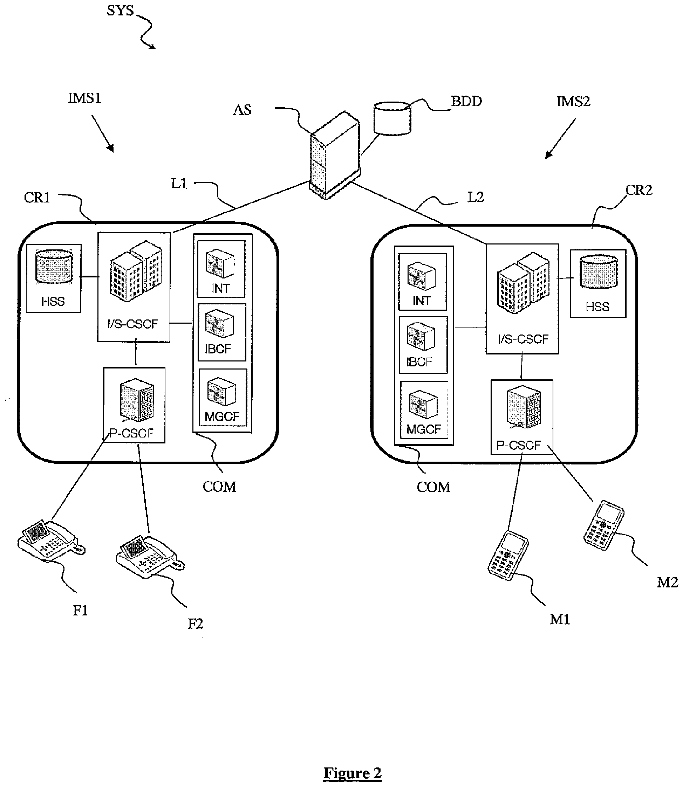

Un premier mode de réalisation d'un procédé de traitement et d'un procédé de gestion va maintenant être décrit en référence aux figures 2 à 4.

En référence à la figure 2, un système SYS comprend un serveur d'application AS et deux cœurs de réseau CR1 et CR2.

Le cœur de réseau CR1 est par exemple un cœur de réseau fixe et est apte à communiquer avec le serveur d'application AS via une première liaison de communication L1.

Le cœur de réseau CR2 est par exemple un cœur de réseau mobile et est apte à communiquer avec le serveur d'application AS via une deuxième liaison de communication L2.

La liaison de communication L1, respectivement la liaison de communication L2, permet la communication de messages de signalisation, par exemple des messages de type SIP. L'interface entre les deux entités reliées par la première, respectivement la deuxième liaison de communication est par exemple une interface de type ISC (pour « IP multimédia Subsystem Service Control Interface » développée dans le standard 3GPP et décrite notamment dans le document « 3GPP TS 23.228 V12.4.0 Group Services and System Aspects; IP Multimedia Subsystem (IMS);Stage 2 (Release 12) ».

Le premier cœur de réseau CR1 et le deuxième cœur de réseau CR2 forment un groupe G de cœurs de réseaux, au sens de l'invention.

A titre d'alternative, le groupe G comprend deux cœurs de réseaux fixes ou deux cœurs de réseau mobiles.

Egalement à titre d'alternative, le groupe G comprend plus de deux cœurs de réseau.

Chaque cœur de réseau du groupe G est interconnecté en IP avec les autres cœurs de réseau du groupe G. En d'autres termes, chaque cœur de réseau est apte à communiquer avec chaque autre cœur de réseau du groupe G via une technologie de type IP.

Le cœur de réseau CR1, respectivement le cœur de réseau CR2, est ici un cœur de réseau incorporant une architecture IMS et mettant en œuvre, pour la signalisation échangée dans le cœur de réseau, le protocole d'initialisation de session SIP. Les caractéristiques de l'architecture IMS et le protocole SIP sont définis respectivement au niveau des standards 3GPP (3rd Generation Partnership Project) et de l'IETF (Internet Engineering Task Force ), notamment dans les documents 3GPP TS 22.228 « Service requirements for the IP Multimedia Core Network Subsystem (Stage 1) » et IETF RFC 3261 « Session Initiation Protocol ». Ils ne sont, de ce fait, pas décrits en détail ici.

Cette hypothèse contenant les cœurs de réseau CR1 et CR2 n'est toutefois pas limitative, et l'invention s'applique également à d'autres architectures de cœur de réseau, comme par exemple à une architecture H323 ainsi qu'à d'autres protocoles de signalisation que le protocole SIP.

Chaque cœur de réseau CR1, CR2 comprend plusieurs entités fonctionnelles. Ainsi, dans le mode de réalisation décrit ici, chaque cœur de réseau CR1, CR2 comprend notamment :
- une entité CSCF (Call Session Control Function), elle-même composée de plusieurs équipements ou serveurs logiques tels que par exemple :
   - un ou plusieurs serveurs S-CSCF (Serving Call Session Control Function) en charge de l'enregistrement des terminaux sur le cœur de réseau considéré CR1 ou CR2,
   - un serveur I-CSCF ( Interrogating Call Session Control Function) en charge de l'aiguillage pour l'initialisation des connexions au cœur de réseau, et
   - un ou plusieurs serveurs P-CSCF (Proxy Call Session Control Function), points de contact des terminaux avec le cœur de réseau ;
- un serveur HSS (Home Subscriber Serveur) en charge de la sauvegarde d'informations de profils des utilisateurs connectés, notamment d'un pointeur vers le serveur d'application AS et de l'authentification des utilisateurs ; - une entité d'interface COM, elle-même composée de plusieurs équipements ou serveurs logiques tels que par exemple :
- un serveur MGCF (Media Gateway Control Function) servant de passerelle vers des réseaux non IP externes au cœur de réseau considéré, par exemple un réseau RTC,
- un serveur IBCF (Interconnect Border Control Function) servant de passerelle vers des réseaux de type IP externes aux cœurs de réseau du groupe G, et
- une entité INT permettant la communication avec les autres cœurs de réseaux du groupe G.

Le serveur d'application AS héberge et fournit des services. L'architecture du serveur AS est décrite plus en détail dans les documents 3GPP TS 23.292 intitulé « Technical Spécification Group Services and System Aspects ; IP Multimédia Core Subsystem Centralized Services ; Stage 2 », release 11, v10.0.0, juin 2011 et 3GPP TS 24.292 intitulé « Technical Spécification Group Core Network and terminais ; IP Multimédia Core Network Subsystem Centralized Services ; Stage 3 », release 10, v10.5.0, septembre 2001.

Le système SYS comporte également un ou plusieurs terminaux F1, F2... aptes à être connectés au premier cœur de réseau CR1 et à s'enregistrer auprès du premier cœur de réseau CR1.

Les terminaux F1, F2...sont par exemple des terminaux fixes, tels que des terminaux téléphoniques filaires, ou des terminaux sans fil. Ils sont aptes à communiquer selon le protocole SIP.

Le système SYS comporte également un ou plusieurs terminaux M1, M2... aptes à être connectés au deuxième cœur de réseau CR2 et à s'enregistrer auprès du deuxième cœur de réseau CR2.

Les terminaux M1, M2...sont par exemple des terminaux téléphoniques mobiles aptes à communiquer selon le protocole SIP.

Le système SYS comporte également une base de données BDD accessible par le serveur d'application AS.

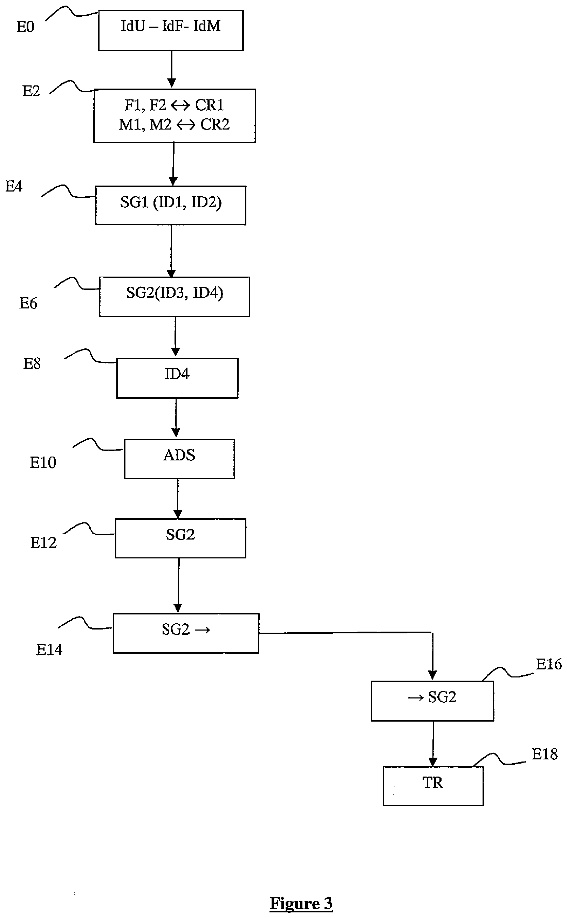

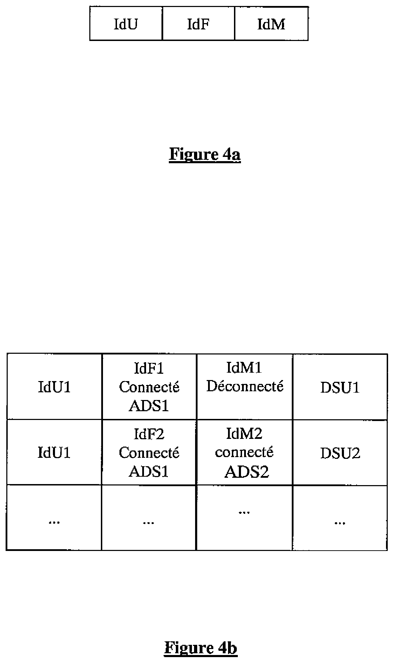

Les principales étapes d'un procédé de traitement et d'un procédé de gestion mis en œuvre dans le système SYS va maintenant être décrit en référence aux figures 3 et 4.

En référence à la figure 3, lors d'une étape préalable d'inscription E0, des informations relatives à des utilisateurs sont stockées dans la base de données BDD.

Les informations relatives à un utilisateur sont enregistrées, c'est-à-dire inscrites, lors d'une phase d'inscription de cet utilisateur.

Cette inscription est par exemple réalisée suite à la connexion de l'utilisateur U, au moyen d'un navigateur Web, à un serveur d'inscription (non représenté) via une interface de type Web.

Le serveur d'inscription est indifféremment le serveur d'application AS ou un autre serveur, par exemple un serveur dédié à cette tâche apte à accéder à la base de données BDD.

La phase d'inscription comporte notamment pour chaque utilisateur U, l'enregistrement dans la base de données BDD, en association avec un identifiant IdU de l'utilisateur U, d'un identifiant IdF d'un premier terminal TU apte à se connecter au premier cœur de réseau CR1 et/ou un identifiant IdM d'un deuxième terminal MU apte à se connecter au deuxième cœur de réseau CR2.

Dans le mode de réalisation décrit ici, un identifiant IdT d'un terminal T se présente sous la forme NT@IdCR dans laquelle NT représente un numéro de téléphone associé à l'utilisateur, un numéro de téléphone associé au terminal ou encore un nom d'utilisateur et IdCR représente un identifiant d'un cœur de réseau, par exemple un nom de domaine associé au cœur de réseau.

Ainsi, l'identifiant IdF se présente sous la forme NT@IdCR1 avec IdCR1 étant un nom de domaine associé au premier cœur de réseau CR1 et l'identifiant IdM se présente sous la forme NT@IdCR2 avec IdCR2 étant un nom de domaine associé au deuxième cœur de réseau CR2.

A titre d'alternative l'identifiant IdT est un numéro de téléphone associé au terminal et il est stocké dans la base de données BDD en association avec un identifiant d'un des cœurs de réseau.

La phase d'inscription peut également comporter l'enregistrement, en association avec l'identifiant d'utilisateur IdU de l'utilisateur U, de données de service DS.

Les données de services DS sont des données relatives à des services de communication auquel l'utilisateur U a souscrit.

Des exemples de tels services sont par exemple une demande de sonnerie simultanée sur l'ensemble des terminaux de l'utilisateur U lors d'un appel à destination d'un terminal de l'utilisateur U ou un service de renvoi du terminal appelé vers un autre terminal en cas de non réponse.

La **figure 4a** illustre un exemple du contenu de la base de données BDD pour l'utilisateur U après l'inscription de cet utilisateur.

Lors d'une étape E2, plusieurs terminaux se connectent à l'un ou à l'autre cœur de réseau du groupe G de cœurs de réseau.

Par exemple, les terminaux F1 et F2 se connectent au premier cœur de réseau CR1 et les terminaux M1 et M2 se connectent au deuxième cœur de réseau CR2.

De façon classique, la connexion d'un terminal à un cœur de réseau est réalisée par exemple lors d'un raccordement physique du terminal à un serveur P-CSCF du cœur de réseau, par exemple via une connexion filaire, ou lors de la mise en marche logicielle du terminal. Ce raccordement ou cette mise en marche provoque l'envoi par le terminal d'un message d'enregistrement MR1.

Egalement, de façon classique, la phase de connexion peut comporter une étape d'authentification préalable du terminal.

Le message MR1 contient un identifiant IdT du terminal, par exemple l'identifiant NT@IdCR, NT étant un numéro de téléphone associé au terminal et IdCR étant un nom de domaine associé au cœur de réseau.

Le message MR1 est par exemple un message de signalisation SIP REGISTER contenant un champ « TO » contenant l'identifiant IdT et un champ « FROM » contenant également l'identifiant IdT.

Le message d'enregistrement MR1 est transmis à un serveur S-SCCF du cœur de réseau via le serveur P-CSCF. Puis, le serveur S-SCCF ayant reçu le message d'enregistrement MR1, transmet au serveur d'application AS, via la liaison de communication reliant le cœur de réseau au serveur d'application AS, un message MR2 contenant l'identifiant IdT.

Le message MR2 est par exemple un message de signalisation SIP REGISTER contenant un champ « R-URI » contenant un identifiant du serveur d'application AS, par exemple une adresse du serveur d'application AS, un champ « FROM » contenant une adresse ADS du serveur S-CSCF transmettant le message MR2 et un champ « TO » contenant l'identifiant IdT du terminal.

Suite à la réception du message d'enregistrement MR2, le serveur d'application AS obtient l'adresse ADS du serveur S-CSCF ayant transmis le message d'enregistrement MR2 et l'enregistre dans la base de données BDD en association avec l'identifiant du terminal IdT.

Dans le mode de réalisation décrit ici, l'adresse ADS est extraite du message de signalisation MR2 reçu.

Le serveur d'application AS positionne ensuite un indicateur de statut VS du terminal à la valeur « connecté ».

L'indicateur de statut VS permet au serveur d'application AS de savoir si un terminal est connecté ou non au cœur de réseau. La valeur de l'indicateur de statut VS est par exemple enregistrée dans la base de données BDD en association avec l'identifiant de terminal IdT. Avant la première connexion du terminal, c'est-à-dire lors de la phase d'inscription, l'indicateur de statut VS est par exemple positionné à la valeur « déconnecté ».

Puis, le serveur d'application AS envoie en retour au serveur S-CSCF du cœur de réseau, via la liaison de communication reliant le cœur de réseau au serveur d'application AS, un message de signalisation MR3 indiquant que la connexion du terminal est effective. Le message de signalisation MR3 est par exemple un message de signalisation SIP « 200 ok ».

Dans le cas où la connexion n'est pas effective, par exemple si le terminal n'est pas préalablement inscrit dans la base de données BDD, le message MR3 signale une erreur dans l'exécution de la connexion.

La figure **4b** illustre un exemple du contenu de la base de données BDD après l'inscription des terminaux F1 et M1 par un utilisateur U1 d'identifiant IdU1, après l'inscription des terminaux F2 et M2 d'un utilisateur U2 d'identifiant IdU2 et après la connexion des terminaux F1, F2 et M2.

Le terminal F1 comporte un identifiant IdF1. L'identifiant IdF1 est un identifiant du premier cœur de réseau CR1. L'indicateur de statut associé au terminal F1 est à l'état « connecté » et l'adresse du serveur S-SCCF auquel le terminal F1 est connecté est ADS1.

Le terminal M1 comporte un identifiant IdM1. L'identifiant IdM1 est un identifiant du deuxième cœur de réseau CR2. L'indicateur de statut associé au terminal M1 est à l'état « déconnecté ».

Le terminal F2 comporte un identifiant IdF2. L'identifiant IdF2 est un identifiant du deuxième cœur de réseau CR2. L'indicateur de statut associé au terminal F2 est à l'état « connecté » et l'adresse du serveur S-SCCF auquel le terminal F2 est connecté est ADS1.

Le terminal M2 comporte un identifiant IdM2. L'identifiant IdM2 est un identifiant du deuxième cœur de réseau CR2. L'indicateur de statut associé au terminal M2 est à l'état « connecté » et l'adresse du serveur S-SCCF auquel le terminal M2 est connecté est ADS2.

Des données de services DSU1, respectivement DSU2 sont enregistrées en association avec l'identifiant d'utilisateur IdU1, respectivement IdU2.

Dans l'exemple illustré ici, les terminaux F1 et F2 sont connectés au même serveur S-CSCF.

A titre d'alternative, les terminaux F1 et F2 sont connectés respectivement à des serveurs S-CSCF différents du premier cœur de réseau CR1.

De même, les terminaux M1 et M2 peuvent être connectés respectivement à des serveurs C-CSCF différents du deuxième cœur de réseau CR2.

Lors d'une étape E4, un serveur S-CSCF du premier cœur de réseau CR1 transmet un message de signalisation SG1 au serveur d'application AS et le serveur d'application AS reçoit le message de signalisation SG1 via une première liaison de communication L1 établie entre le serveur d'application AS et le premier cœur de réseau CR1.

Le message de signalisation SG1 représente un premier message de signalisation SG1 au sens de l'invention.

Comme décrit ultérieurement, en relation avec différents modes de réalisation particuliers, le message de signalisation SG1 est par exemple un message de demande d'établissement d'appel émise par un terminal connecté au premier cœur de réseau CR1 ou par un terminal non connecté à un des cœurs de réseau du groupe G de cœurs de réseau.

Le message de signalisation SG1 contient un identifiant ID1 de terminal émetteur du message et un identifiant ID2 de terminal destinataire.

L'identifiant de terminal ID1 est ici un identifiant d'un terminal connecté au premier cœur de réseau CR1 ou un identifiant d'un terminal d'un réseau extérieur.

Par terminal d'un réseau extérieur, on entend un terminal non connecté à un cœur de réseau du groupe G de cœurs de réseaux.

L'identifiant de terminal ID2 est un identifiant d'un terminal destinataire du message de signalisation SG1.

Le message SG1 est par exemple un message de signalisation de type SIP INVITE contenant un champ « FROM » contenant l'identifiant ID1 et un champ « TO » contenant l'identifiant ID2

A titre d'alternative, le message de signalisation SG1 reçu par le serveur d'application AS provient d'un serveur S-CSCF du deuxième cœur de réseau CR2, via la deuxième liaison de communication L2.

Lors d'une étape E6, le serveur d'application AS obtient un deuxième message de signalisation SG2.

Le deuxième message de signalisation SG2 est soit le premier message de signalisation SG1, soit un message de signalisation généré par le serveur d'application AS à partir du premier message de signalisation SG1, suite à la réception de ce message.

Le deuxième message de signalisation SG2 contient un premier identifiant ID3 et un identifiant ID4 de terminal destinataire du deuxième message de signalisation SG2.

Le premier identifiant ID3 est par exemple un identifiant du premier terminal connecté au premier cœur de réseau CR1 ou un identifiant d'un terminal d'un réseau extérieur.

Le message SG1 est par exemple un message de signalisation de type SIP INVITE.

Lors d'une étape E8, le serveur d'application AS analyse le deuxième message de signalisation SG2 pour déterminer en fonction de l'identifiant de terminal destinataire contenu dans le deuxième message de signalisation SG2, si ce terminal est connecté à un cœur de réseau du groupe G de cœurs de réseau autre que le cœur de réseau ayant transmis le premier message de signalisation SG1.

L'étape E8 d'analyse permet de déterminer si l'identifiant ID4 de terminal destinataire est un identifiant d'un terminal connecté à un cœur de réseau du groupe G de cœurs de réseau autre que le cœur de réseau ayant transmis le premier message de signalisation SG1.

Dans le mode de réalisation décrit, l'étape E8 d'analyse permet de déterminer si l'identifiant ID4 de terminal destinataire est ou non un identifiant de deuxième cœur de réseau CR2.

Plus précisément, le serveur d'application AS extrait du deuxième message de signalisation SG2, l'identifiant de terminal destinataire ID4.

Dans le mode de réalisation décrit ici où l'identifiant ID4 est de la forme NT@IdCR, la valeur IdCR permet de déterminer le cœur de réseau auquel le terminal d'identifiant ID4 est connecté.

A titre d'alternative, la base de données BDD contient une liste d'identifiants de terminal pour chaque cœur de réseau et l'identifiant de terminal destinataire ID4 est recherché dans les listes.

Dans le cas où l'identifiant de terminal destinataire ID4 est un identifiant de terminal connecté au même cœur de réseau que le premier terminal, c'est-à-dire dans le mode de réalisation décrit ici, un identifiant de terminal connecté au premier cœur de réseau CR1 ou si l'identifiant de terminal destinataire ID4 n'est pas un identifiant d'un cœur de réseau du groupe G, le message de signalisation SG2 est traité de façon classique par le serveur d'application AS et un message de signalisation est transmis au serveur S-CSCF du premier cœur de réseau CR1 en réponse au premier message de signalisation SG1 émis par celui-ci.

Dans le cas où la détermination est positive, c'est-à-dire dans le cas où l'identifiant de terminal destinataire ID4 est un identifiant du deuxième cœur de réseau CR2, le serveur d'application AS recherche l'identifiant de terminal destinataire ID4 dans la base de données BDD et extrait l'indicateur de statut VS associé à cet identifiant ID4.

Dans le cas où l'identifiant ID4 n'est pas dans la base de données BDD, le serveur d'application AS renvoie un message de réponse, via la première liaison de communication L1, au serveur S-CSCF ayant émis le premier message de signalisation SG1 lors de l'étape E4 et ce serveur S-CSCF traite le message de réponse.

Dans le cas où l'identifiant de terminal destinataire ID4 est dans la base de données BDD mais que le terminal destinataire n'est pas connecté, c'est-à-dire que l'indicateur de statut VS est à la valeur « déconnecté », un message de signalisation est également renvoyé par le serveur d'application AS au serveur S-CSCF du premier cœur de réseau CR1, via la première liaison de communication L1.

A titre d'alternative, l'indicateur de statut VS n'est pas analysé.

Dans le cas où l'identifiant ID4 est enregistré dans la base de données BDD et que l'indicateur de statut VS est à la valeur « connecté », le serveur d'application AS extrait de la base de données BDD, lors d'une étape E10, l'adresse ADS du serveur S-CSCF enregistrée en association avec l'identifiant ID4 du terminal destinataire.

Dans le mode de réalisation décrit où l'identifiant destinataire ID4 se présente sous la forme d'un NT@IdCR, l'identifiant IdCR permet d'identifier le cœur de réseau associé.

A titre d'alternative, l'identifiant du terminal destinataire est un numéro de téléphone et un identifiant de cœur de réseau associé est obtenu par le serveur d'application AS par consultation d'une table de correspondance contenant des numéros de téléphone associés respectivement à un identifiant d'un cœur de réseau du groupe G.

La table de correspondance est par exemple enregistrée dans la base de données BDD.

Lors d'une étape E12, le serveur d'application AS insère un indicateur de traitement TR dans le message de signalisation SG2.

Le message de signalisation SG2 contient l'identifiant de terminal destinataire ID4.

L'indicateur de traitement TR signale que le message SG2 a été traité par le serveur d'application AS, c'est-à-dire que les services enregistrés dans les données de service pour l'utilisateur du terminal destinataire ont été pris en compte par le serveur d'application AS.

L'indicateur de traitement TR est par exemple un paramètre décrit dans le protocole SIP, par exemple un paramètre « no services » du champ SIP « route ».

Le message de signalisation SG2 est par exemple un message de signalisation de type SIP INVITE.

L'étape E12 est suivie d'une étape E14 lors de laquelle le serveur d'application AS transmet le message de signalisation SG2 à destination du terminal destinataire d'identifiant ID4.

Le message de signalisation SG2 est transmis par le serveur d'application AS au serveur S-CSCF ayant pour adresse, l'adresse ADS extraite de la base de données lors de l'étape E8.

Le message de signalisation SG2 est transmis au serveur S-CSCF d'adresse ADS via une deuxième liaison de communication L2 établie entre le serveur d'application AS et le deuxième cœur de réseau CR2.

Le message de signalisation SG2 est par exemple transmis sous la forme d'un message de type OOTB (pour 'Out Of The Blue'). Un message de type OOTB est un message de signalisation envoyé à l'initiative du serveur d'application AS. Les messages de type OOTB sont par exemple décrits dans le document 3GPP TS 24.229.

L'étape E14 est suivie d'une étape E16 lors de laquelle le message de signalisation SG2 est reçu par le serveur S-CSCF du deuxième cœur de réseau CR2.

Lors d'une étape E18, ce serveur S-CSCF détermine grâce à l'indicateur de traitement TR contenu dans le message SG2 que le message SG2 reçu a déjà été traité par le serveur d'application AS et retransmet directement le message SG2 au terminal destinataire.

En variante, suite à la réception du message de signalisation SG2 par le serveur S-CSCF du deuxième cœur de réseau CR2, le message de signalisation SG2 est traité de façon classique par le serveur S-CSCF du deuxième cœur de réseau CR2, c'est-à-dire qu'il est transmis au serveur d'application AS comme tout message de signalisation arrivant au niveau d'un serveur S-CSCF. Dans ce cas, le serveur d'application AS déterminant que le message contient un indicateur de traitement renvoie ce message au serveur S-CSCF à l'origine de l'envoi de ce message sans le traiter.

Egalement, en variante, le message de signalisation SG2 ne contient pas d'indicateur de traitement TR. Dans ce cas, le serveur S-CSCF détermine que le message provient de la deuxième liaison de communication L2 et le transmet au terminal destinataire sans le renvoyer au serveur d'application AS.

Dans le mode de réalisation décrit ici, l'adresse ADS du serveur S-CSCF enregistrée dans la base de donnée BDD en association avec un identifiant de terminal est extraite du message de signalisation MR2 reçu lors d'une étape E2 de connexion.

Dans une première variante du mode de réalisation, l'adresse ADS est obtenue par le serveur d'application AS après la phase de connexion du terminal auprès d'un cœur de réseau.

De façon connue, l'adresse ADS est enregistrée dans le serveur HSS par le serveur S-CSCF lors de la phase de connexion.

Dans cette variante du mode de réalisation, le serveur d'application AS obtient cette adresse ADS enregistrée dans le serveur HSS, en réponse à une requête qu'il transmet au serveur HSS. L'interface de communication utilisée pour échanger la requête et la réponse entre le serveur d'application AS et le serveur HSS est une interface Sh décrite dans les normes 3GPP TS 29.328 et 3GPP TS 29.329. L'interface Sh permet l'échange d'informations entre le serveur d'application AS et le serveur HSS par un canal de communication dédié. Elle utilise par exemple le protocole d'authentification Diameter décrit dans la norme IETF RFC 3588 « Diameter Base Protocol ».

Dans une autre variante du mode de réalisation, lors de l'étape E14, le message de signalisation SG2 est transmis par le serveur d'application AS au serveur I-CSCF qui retransmet le message SG2 au serveur S-CSCF auquel le terminal est connecté en se basant sur les informations enregistrées dans le serveur HSS. Dans ce cas, l'adresse du serveur I-SCCF du premier cœur de réseau CR1 a été préalablement stockée, de façon statique dans une mémoire accessible par le serveur d'application AS. Dans cette variante de réalisation, il n'est pas nécessaire pour le serveur d'application AS, lors de l'étape E2 de connexion d'enregistrer l'adresse ADS du serveur S-CSCF ayant transmis le message d'enregistrement MR2.

Les étapes E0 à E14 représentent les étapes du procédé de traitement mises en œuvre par exemple par le serveur d'application AS.

Les étapes E16 et E18 représentent les étapes du procédé de gestion mises en œuvre par exemple par un serveur S-CSCF du deuxième cœur de réseau CR2.

Dans le mode de réalisation décrit, les messages de signalisation SG1 et SG2 sont des messages de signalisation de type SIP INVITE.

L'invention s'applique également à d'autres messages de signalisation SIP tels que par exemple REGISTER, SUBSCRIBE, NOTIFY, REFER...

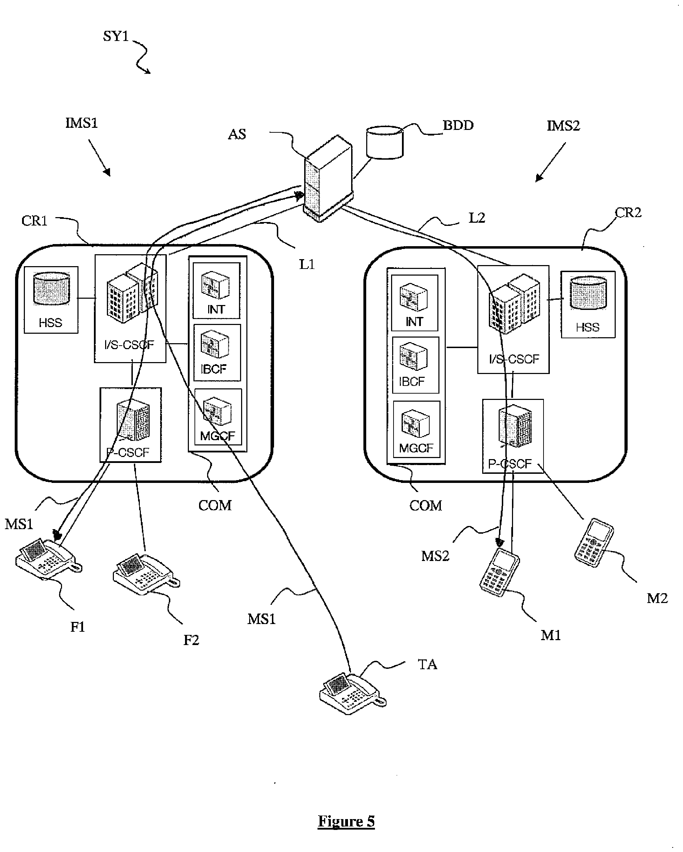

Un premier exemple de mise en œuvre particulier va maintenant être décrit en référence à la figure 5.

La figure 5 illustre un système SY1 comprenant un premier cœur de réseau CR1, un deuxième cœur de réseau CR2, un serveur d'application AS et une base de données BDD.

Le premier cœur de réseau CR1, le deuxième cœur de réseau CR2 et le serveur d'application AS sont similaires à ceux décrits précédemment en relation avec la figure 2.

Lors d'une phase d'inscription, un identifiant IDF1 d'un premier terminal F1, un identifiant IDM1 d'un deuxième terminal M1 et des données de service DS ont été enregistrés dans la base de données BDD en association avec un identifiant IdU1 d'un utilisateur U1.

Les données de service DS comprennent notamment des données indiquant que l'utilisateur U1 a souscrit à un service de sonnerie simultanée sur les deux terminaux F1 et M1.

Le premier terminal F1 de l'utilisateur U1 est connecté et enregistré auprès du premier cœur de réseau CR1. Lors de la phase d'enregistrement du terminal F1 auprès du cœur de réseau CR1, un indicateur de statut VS1, positionné à la valeur « connecté » et une adresse ADF du serveur S-CSCF auquel est connecté le premier terminal F1 ont été enregistrés dans la base de données BDD en association avec l'identifiant IDF1 du terminal F1.

Le deuxième terminal M1 de l'utilisateur U1 est connecté et enregistré auprès du deuxième cœur de réseau CR2.

Lors de la phase d'enregistrement du terminal M1 auprès du cœur de réseau CR2, un indicateur de statut VS2, positionné à la valeur « connecté » et une adresse ADM du serveur S-CSCF auquel est connecté le deuxième terminal M1 ont été enregistrés dans la base de données BDD en association avec l'identifiant IDM1 du terminal M1.

Le système SY1 comporte également un terminal TA d'un utilisateur U2. L'utilisateur U2 n'est inscrit ni auprès du premier cœur de réseau CR1, ni auprès du deuxième cœur de réseau CR2.

Le terminal TA est par exemple un terminal connecté au réseau RTC (pour « Réseau Téléphonique Commuté »).

A titre d'alternative, le terminal TA est connecté à un cœur de réseau autre que le premier cœur de réseau et autre que le deuxième cœur de réseau CR2.

L'utilisateur U2 souhaitant établir un appel téléphonique avec l'utilisateur U1, à partir de son terminal TA, saisit l'identifiant IDF1 du premier terminal F1 au moyen d'une interface utilisateur, par exemple un clavier numérique, ou sélectionne cet identifiant dans un répertoire. Un message de signalisation MS1 est alors envoyé par le terminal TA et transmis, via les serveurs MGCF et I-CSCF du premier cœur de réseau CR1, au serveur S-CSCF auquel le terminal F1 est connecté puis retransmis par ce serveur S-CSCF au serveur d'application AS via la liaison de communication L1.

Le message MS1 contient un premier identifiant de terminal ID1 et un deuxième identifiant de terminal ID2.

Le premier identifiant de terminal ID1 est un identifiant du terminal TA à l'origine de l'appel et le deuxième identifiant de terminal ID2 est l'identifiant IDF1 du terminal F1.

Suite à la réception du message MS1, le serveur d'application AS détermine grâce aux données de service DS qu'un service de sonnerie simultanée a été souscrit par l'utilisateur U1 et construit un message MS2 contenant un premier identifiant ID3 et un deuxième identifiant ID4. Le premier identifiant ID3 est l'identifiant ID1 du terminal appelant TA et le deuxième identifiant ID4 est l'identifiant IDM1 du terminal M1. L'identifiant ID4 est l'identifiant du terminal destinataire du message MS2.

Le serveur d'application AS détermine que l'identifiant IDM1 du terminal M1 est un identifiant de deuxième cœur de réseau CR2 alors que le message MS1 a été reçu par le serveur d'application AS en provenance du premier cœur de réseau CR1.

Le serveur d'application AS insère dans le message MS2, un indicateur de traitement TR.

Puis il transmet le message MS2 au deuxième cœur de réseau CR2 via une deuxième liaison de communication L2 établie avec le deuxième cœur de réseau CR2. Plus précisément, le message MS2 est transmis au serveur S-CSCF dont l'adresse ADM a été stockée précédemment dans la base de données BDD en association avec l'identifiant IDM1 du terminal M1.

Le message MS2 est reçu par le serveur S-CSCF du deuxième cœur de réseau CR2 d'adresse ADM et transmis directement au terminal M1 provoquant ainsi l'activation de la sonnerie de ce terminal.

L'indicateur de traitement TR permet au serveur S-CSCF de savoir qu'il n'est pas nécessaire de s'adresser au serveur d'application AS avant de transmettre le message de signalisation MS2 au terminal M1.

Par ailleurs, le message MS1 est renvoyé au serveur S-CSCF du premier cœur de réseau CR1 via la première liaison de communication L1 établie. Le message MS1 est ensuite transmis au terminal F1, provoquant ainsi l'activation de la sonnerie du terminal F1.

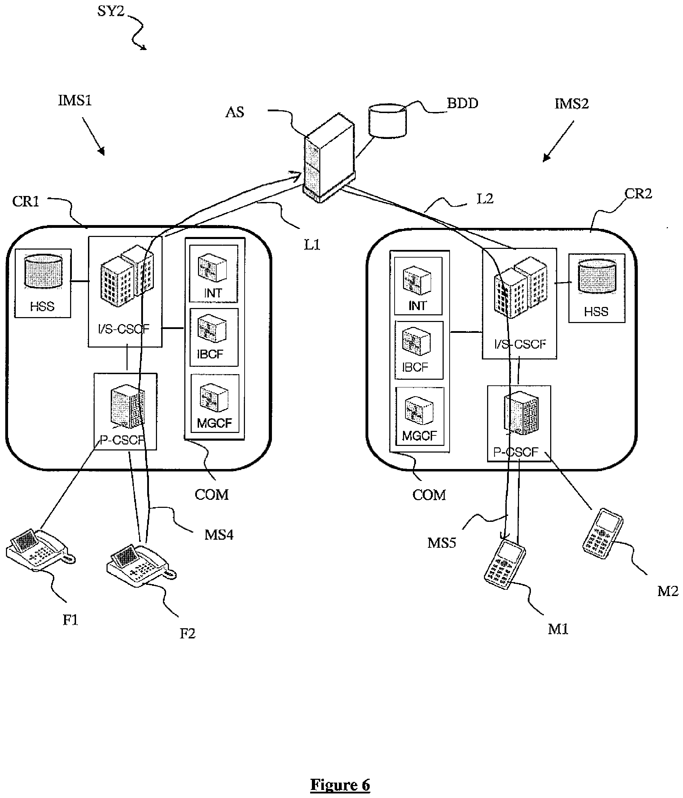

Un deuxième exemple particulier de mise en œuvre va maintenant être décrit en référence à la figure 6.

La figure 6 illustre un système SY2 comprenant un premier cœur de réseau CR1, un deuxième cœur de réseau CR2, un serveur d'application AS et une base de données BDD.

Le premier cœur de réseau CR1, le deuxième cœur de réseau CR2, le serveur d'application AS et la base de données BDD sont similaires à ceux décrits précédemment en relation avec la figure 2.

Lors d'une phase d'inscription d'un utilisateur U1, un identifiant IDF1 d'un premier terminal F1, un identifiant IDM1 d'un deuxième terminal M1 et des données de service DS ont été enregistrés dans la base de données BDD en association avec un identifiant IdU1 de l'utilisateur U1.

Les données de service DS comprennent notamment des données indiquant que l'utilisateur U1 a souscrit à un service de renvoi d'appel du terminal F1 vers le terminal M1.

Lors d'une phase d'inscription d'un utilisateur U2, un identifiant IDF2 d'un terminal fixe F2 a été enregistré dans la base de données BDD en association avec un identifiant Id2 de l'utilisateur U2.

Le premier terminal F1 de l'utilisateur U1 est connecté et enregistré auprès du premier cœur de réseau CR1. Lors de la phase de connexion du terminal F1 auprès du cœur de réseau CR1, un indicateur de statut VS1, positionné à la valeur « connecté » et une adresse ADF du serveur S-CSCF auquel est connecté le premier terminal F1 ont été enregistrés dans la base de données BDD en association avec l'identifiant IDF1 du terminal F1.

Le deuxième terminal M1 de l'utilisateur U1 est connecté et enregistré auprès du deuxième cœur de réseau CR2.

Le terminal F2 de l'utilisateur U2 est connecté et enregistré auprès du premier cœur de réseau CR1.

Lors de la phase d'enregistrement du terminal M1 auprès du deuxième cœur de réseau CR2, un indicateur de statut VS2, positionné à la valeur « connecté » et une adresse ADM du serveur S-CSCF auquel est connecté le terminal M1 ont été enregistrés dans la base de données BDD en association avec l'identifiant IDM1 du terminal M1.

L'utilisateur U2 souhaitant établir un appel téléphonique avec l'utilisateur U1, à partir de son terminal F2, saisit l'identifiant IDF1 du terminal F1 au moyen d'une interface utilisateur, par exemple un clavier numérique, ou sélectionne cet identifiant dans un répertoire. Un message de signalisation MS4 est envoyé par le terminal F2 et transmis au serveur S-CSCF auquel le terminal F2 est connecté puis retransmis par ce serveur S-CSCF au serveur d'application AS.

Le message MS4 contient un premier identifiant de terminal ID1 et un deuxième identifiant de terminal ID2.

Le premier identifiant de terminal ID1 est l'identifiant IDF2 du terminal F2 à l'origine de l'appel et le deuxième identifiant de terminal ID2 est un identifiant IDF1 du terminal F1 destinataire de l'appel.

Suite à la réception du message MS4, le serveur d'application AS détermine grâce aux données de service DS qu'un service de renvoi d'appel a été souscrit par l'utilisateur U1 et construit un message MS5 contenant un premier identifiant ID3 et un deuxième identifiant ID4. Le premier identifiant ID3 est l'identifiant du terminal appelant F2 et le deuxième identifiant ID4 est l'identifiant IDM1 du terminal M1.

Le serveur d'application AS détermine que l'identifiant IDM1 du terminal M1 est un identifiant de deuxième cœur de réseau CR2 alors que le message MS4 a été reçu par le premier cœur de réseau CR1.

Il insère dans le message MS5, un indicateur de traitement TR.

Puis il transmet le message MS5 au deuxième cœur de réseau CR2 via une deuxième liaison de communication L2 établie avec le deuxième cœur de réseau CR2. Plus précisément, le message MS5 est transmis au serveur S-CSCF dont l'adresse ADM a été stockée précédemment dans la base de données BDD en association avec l'identifiant IDM1 du terminal M1.

Le message MS5 est reçu par le serveur S-CSCF du deuxième cœur de réseau CR2 et transmis directement au terminal M1 provoquant ainsi l'activation de la sonnerie de ce terminal.

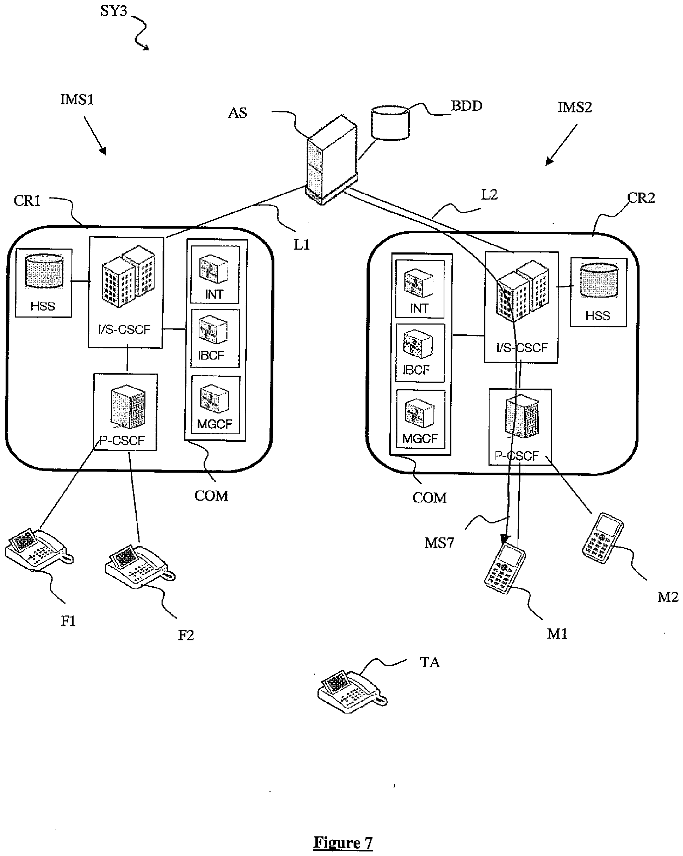

Un troisième exemple de mise en œuvre particulier va maintenant être décrit en référence à la figure 7.

La figure 7 illustre un système SY3 comprenant un premier cœur de réseau CR1, un deuxième cœur de réseau CR2, un serveur d'application AS et une base de données BDD.

Le premier cœur de réseau CR1, le deuxième cœur de réseau CR2, le serveur d'application AS et la base de données BDD sont similaires à ceux décrits précédemment en relation avec la figure 2.

Lors d'une phase d'inscription, un identifiant IDF1 d'un premier terminal F1, un identifiant IDM1 d'un deuxième terminal M1 et des données de service DS ont été enregistrés dans la base de données BDD en association avec un identifiant IdU1 d'un utilisateur U1.

Les données de service DS comprennent notamment des données indiquant que l'utilisateur U1 a souscrit à un service de transfert d'appel sur les deux terminaux F1 et M1.

Le premier terminal F1 de l'utilisateur U1 est connecté et enregistré auprès du premier cœur de réseau CR1. Lors de la phase d'enregistrement du terminal F1 auprès du cœur de réseau CR1, un indicateur de statut VS1, positionné à la valeur « connecté », et une adresse ADF du serveur S-CSCF auquel est connecté le premier terminal F1 ont été enregistrés dans la base de données BDD en association avec l'identifiant IDF1 du terminal F1.

Le deuxième terminal M1 de l'utilisateur U1 est connecté et enregistré auprès du deuxième cœur de réseau CR2.

Lors de la phase d'enregistrement du terminal M1 auprès du cœur de réseau CR2, un indicateur de statut VS2, positionné à la valeur « connecté » et une adresse ADM du serveur S-CSCF auquel est connecté le deuxième terminal M1 ont été enregistrés dans la base de données BDD en association avec l'identifiant IDM1 du terminal M1.

Le système SY3 comporte également un terminal TA d'un utilisateur U2. Le terminal TA de l'utilisateur U2 est par exemple un terminal qui n'est inscrit ni auprès du premier cœur de réseau CR1, ni auprès du deuxième cœur de réseau CR2.

A titre d'alternative, le terminal TA est un terminal connecté au premier cœur de réseau CR1 ou au deuxième cœur de réseau CR2.

Il est supposé qu'un appel téléphonique est établi entre le terminal TA et le terminal F1.

Cet appel est par exemple établi à la demande du terminal TA.

A titre d'alternative, l'appel est établi à la demande du terminal F1.

En cours de conversation, l'utilisateur U1 du terminal F1 souhaite poursuivre la conversation avec son terminal mobile M1 et demande alors le transfert de la communication établie de son terminal F1 vers le terminal M1.

Ce transfert est par exemple demandé à l'aide d'une application logicielle installée sur le terminal F1 et apte à transmettre une requête de type HTTP (pour « HyperText Transfer Protocol ») au serveur d'application AS.

A titre d'alternative, l'utilisateur U1 active une touche « prédéterminée » du terminal F1 et l'activation de cette touche provoque l'envoi par le terminal F1 d'un message de signalisation de type REFER défini dans le protocole SIP au serveur d'application AS.

Suite à la réception de cette demande de transfert, le serveur d'application AS détermine qu'un transfert vers le terminal M1, de la communication établie a été demandé par l'utilisateur U1 et construit un message MS7 contenant un premier identifiant ID3 et un deuxième identifiant ID4. Le premier identifiant ID3 est un identifiant ID1 du terminal appelant TA et le deuxième identifiant ID4 est l'identifiant IDM1 du terminal M1. L'identifiant ID4 est l'identifiant du terminal destinataire du message MS7.

Le message MS7 est ici obtenu en fonction d'un premier message de signalisation reçu par le serveur d'application lors de l'établissement de la communication en cours ou en fonction d'un message de signalisation REFER reçu via la première liaison de communication L1.

Le serveur d'application AS détermine que l'identifiant IDM1 du terminal M1 est un identifiant de deuxième cœur de réseau CR2 alors que le premier message de signalisation a été reçu par le serveur d'application AS en provenance du premier cœur de réseau CR1.

Le serveur d'application AS insère dans le message MS7, un indicateur de traitement TR.

Puis il transmet le message MS7 au deuxième cœur de réseau CR2 via une deuxième liaison de communication L2 établie avec le deuxième cœur de réseau CR2. Plus précisément, le message MS7 est transmis au serveur S-CSCF dont l'adresse ADM a été stockée précédemment dans la base de données BDD en association avec l'identifiant IDM1 du terminal M1.

Le message MS7 est reçu par le serveur S-CSCF du deuxième cœur de réseau CR2 d'adresse ADM et transmis au terminal M1 provoquant ainsi l'activation de la sonnerie de ce terminal.

Il est précisé que le message MS7 est transmis directement au terminal M1 sans solliciter de nouveau le serveur d'application AS pour le terminal M1 grâce à l'indicateur de traitement TR.

De façon classique, le décroché du terminal M1 par l'utilisateur U1 provoque le transfert de la communication établie entre le terminal TA et le terminal F1 vers une communication établie entre le terminal TA et le terminal M1. Il provoque en conséquence la rupture de la communication établie entre le terminal TA et le terminal F1.

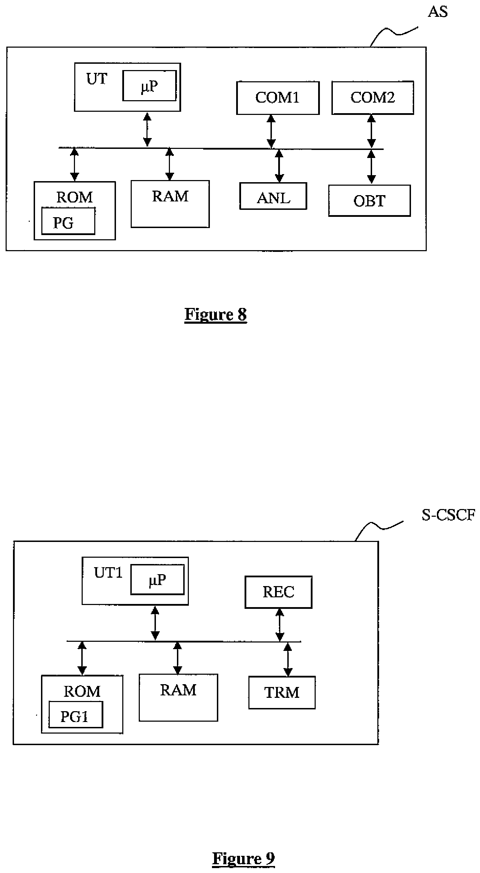

Selon un mode de réalisation choisi et représenté à la figure 8, un dispositif mettant en œuvre un procédé de traitement selon l'invention est par exemple un serveur d'application AS qui comporte de façon connue, notamment une unité de traitement UT équipée d'un microprocesseur, une mémoire morte de type ROM ou EEPROM, une mémoire vive de type RAM.

Ce dispositif AS comprend un premier module de communication COM1, un module d'obtention OBT, un module d'analyse ANL et un deuxième module de communication COM2.

Le premier module de communication COM1 est apte à émettre et recevoir des messages de signalisation relatifs à une communication entre deux utilisateurs, via une première liaison de communication établie entre ledit serveur d'application et un premier ensemble de dispositifs formant un premier cœur de réseau.

Le module d'obtention OBT est apte à obtenir, en fonction d'un premier message de signalisation reçu via la première liaison de communication, un deuxième message de signalisation comportant un identifiant d'un terminal destinataire dudit deuxième message.

Le module d'analyse ANL est apte à déterminer, en fonction dudit identifiant de terminal destinataire, si ledit terminal destinataire est connecté à un deuxième cœur de réseau d'un groupe prédéfini de cœurs de réseau, ledit deuxième cœur de réseau étant différent dudit premier cœur de réseau.

Le deuxième module de communication COM2 est apte à transmettre en cas de détermination positive, le deuxième message de signalisation via une deuxième liaison de communication établie entre ledit serveur d'application et un deuxième ensemble de dispositifs formant ledit deuxième cœur de réseau.

Selon un mode de réalisation choisi et représenté à la figure 9, un dispositif mettant en œuvre un procédé de gestion selon l'invention est par exemple un serveur S-CSCF d'un ensemble de dispositifs formant un cœur de réseau qui comporte de façon connue, notamment une unité de traitement UT1 équipée d'un microprocesseur, une mémoire morte de type ROM ou EEPROM, une mémoire vive de type RAM.

Ce dispositif S-CSCF comprend un module de réception REC et un module de transmission TRM.

Le module de réception REC est apte à recevoir, via une deuxième liaison de communication établie entre un serveur d'application et ledit serveur, un deuxième message de signalisation relatif à une communication entre deux terminaux et comportant un identifiant de terminal destinataire dudit message, ledit deuxième message ayant été obtenu par ledit serveur d'application en fonction d'un premier message de signalisation reçu par ledit serveur d'application via une première liaison de communication établie entre ledit serveur d'application et un premier ensemble de dispositifs formant un premier cœur de réseau.

Ledit deuxième message peut comporter également un indicateur de traitement indiquant audit serveur de contrôle que ledit deuxième message a été traité par ledit serveur d'application

Le module de transmission TRM est apte à transmettre ledit deuxième message à destination dudit terminal destinataire.

La mémoire morte EEPROM contient un programme d'ordinateur PG1 comportant des instructions de programme adaptées à réaliser les étapes d'un procédé de gestion selon l'invention.

Lors de la mise sous tension, le programme PG1 stocké dans la mémoire de type EEPROM est transféré dans la mémoire vive qui contiendra alors un code exécutable ainsi que des registres pour mémoriser les variables nécessaires à la mise en œuvre d'une étape de réception, via une deuxième liaison de communication établie entre un serveur d'application et ledit serveur, d'un deuxième message de signalisation comportant un identifiant de terminal destinataire dudit deuxième message, ledit deuxième message ayant été obtenu par ledit serveur d'application en fonction d'un premier message de signalisation reçu par ledit serveur d'application via une première liaison de communication établie entre ledit serveur d'application et un premier ensemble de dispositifs formant un premier cœur de réseau; et d'une étape de transmission dudit deuxième message à destination dudit deuxième terminal.

## Revendications

1. Procédé de traitement relatif à une communication, mis en œuvre par un serveur d'application (AS) apte à émettre et à recevoir des messages de signalisation via une première liaison de communication (L1) établie entre ledit serveur d'application (AS) et un premier ensemble de dispositifs formant un premier cœur de réseau (CR1), **caractérisé en ce qu'**il comporte les étapes suivantes :
- réception (E4), via la première liaison de communication (L1), d'un premier message de signalisation (SG1);
- obtention (E6), en fonction dudit premier message de signalisation reçu (SG1), d'un deuxième message de signalisation (SG2) comportant un identifiant d'un terminal destinataire (ID4) dudit deuxième message;
- analyse (E8) pour déterminer, en fonction dudit identifiant (ID4) de terminal destinataire, si ledit terminal destinataire est connecté à un deuxième cœur de réseau (CR2) d'un groupe prédéfini (G) de cœurs de réseau, ledit deuxième cœur de réseau (CR2) étant différent dudit premier cœur de réseau (CR1);
- en cas de détermination positive, insertion dans le deuxième message d'un indicateur de traitement signalant qu'au moins un service enregistré dans des données de service en association avec un identifiant d'un utilisateur du terminal destinataire a été pris en compte par ledit serveur d'application et transmission (E14) dudit deuxième message de signalisation (ID4).

2. Procédé de traitement selon la revendication 1 dans lequel le deuxième message est transmis via une deuxième liaison de communication (L2) établie entre ledit serveur d'application (AS) et un deuxième ensemble de dispositifs formant ledit deuxième cœur de réseau (CR2).

3. Procédé de traitement selon la revendication 1 dans lequel ledit identifiant de terminal destinataire comporte un identifiant du deuxième cœur de réseau.

4. Procédé de traitement selon l'une des revendications précédentes dans lequel lors de l'étape de transmission, ledit deuxième message de signalisation est transmis à un dispositif dudit deuxième ensemble de dispositifs, une adresse dudit dispositif étant préalablement enregistrée en association avec ledit identifiant de terminal destinataire.

5. Procédé de traitement selon la revendication 4 dans lequel ladite adresse est enregistrée par ledit serveur d'application suite à la réception d'un message d'enregistrement transmis préalablement par ledit terminal destinataire.

6. Procédé de traitement selon l'une des revendications précédentes dans lequel ledit deuxième message est ledit premier message dans lequel ledit indicateur de traitement est inséré.

7. Procédé de traitement selon l'une des revendications précédentes dans lequel ledit deuxième message est déterminé en fonction d'un identifiant de terminal contenu dans ledit premier message de signalisation et en fonction de données de service préalablement enregistrées en association avec un identifiant d'utilisateur dudit terminal

8. Procédé de gestion d'un message de signalisation relatif à une communication, mis en œuvre par un serveur (S-CSCF) d'un ensemble de dispositifs formant un deuxième cœur de réseau (CR2), **caractérisé en ce qu'**il comporte les étapes suivantes :
- réception (E16), d'un deuxième message de signalisation (SG2) comportant un identifiant (ID4) de terminal destinataire dudit message et un indicateur de traitement signalant qu'au moins un service enregistré dans des données de service en association avec un identifiant d'un utilisateur du terminal destinataire a été pris en compte par un serveur d'application (AS), ledit deuxième message ayant été obtenu par ledit serveur d'application (AS) en fonction d'un premier message de signalisation (SG1) reçu par ledit serveur d'application (AS) via une première liaison de communication (L1) établie entre ledit serveur d'application (AS) et un premier ensemble de dispositifs formant un premier cœur de réseau (CR1) ;
- détermination, grâce audit indicateur de traitement (TR) contenu dans ledit deuxième message de signalisation (SG2), que ledit deuxième message de signalisation (SG2) a déjà été traité par le serveur d'application (AS) ;
- transmission (E18) dudit deuxième message (SG2) à destination dudit terminal destinataire.

9. Procédé de gestion selon la revendication 8 dans lequel ledit deuxième message de signalisation est reçu via une deuxième liaison de communication (L2) établie entre le serveur d'application (AS) et ledit serveur du deuxième cœur de réseau.

10. Serveur d'application (AS) comportant un premier module de communication (COM1) pour émettre et recevoir des messages de signalisation relatifs à une communication entre deux utilisateurs, via une première liaison de communication établie entre ledit serveur d'application et un premier ensemble de dispositifs formant un premier cœur de réseau, **caractérisé en ce qu'**il comporte :
- un module d'obtention (OBT), en fonction d'un premier message de signalisation reçu via la première liaison de communication, d'un deuxième message de signalisation comportant un identifiant d'un terminal destinataire dudit deuxième message;
- un module d'analyse (ANL) pour déterminer, en fonction dudit identifiant de terminal destinataire, si ledit terminal destinataire est connecté à un deuxième cœur de réseau d'un groupe prédéfini de cœurs de réseau, ledit deuxième cœur de réseau étant différent dudit premier cœur de réseau;
- un deuxième module de communication (COM2) pour transmettre, en cas de détermination positive, ledit deuxième message de signalisation dans lequel un indicateur de traitement signalant qu'au moins un service enregistré dans des données de service en association avec un identifiant d'un utilisateur du terminal destinataire a été pris en compte par ledit serveur d'application a été inséré.

11. Serveur (S-CSCF) d'un ensemble de dispositifs formant un deuxième cœur de réseau (CR2), **caractérisé en ce qu'**il comporte:
- un module de réception (REC), d'un deuxième message de signalisation relatif à une communication et comportant un identifiant de terminal destinataire dudit message et un indicateur de traitement signalant qu'au moins un service enregistré dans des données de service en association avec un identifiant d'un utilisateur du terminal destinataire a été pris en compte par un serveur d'application (AS), ledit message ayant été obtenu par ledit serveur d'application en fonction d'un premier message de signalisation reçu par ledit serveur d'application via une première liaison de communication établie entre ledit serveur d'application et un premier ensemble de dispositifs formant un premier cœur de réseau.
- un module de détermination apte à déterminer, grâce audit indicateur de traitement (TR) contenu dans ledit deuxième message de signalisation (SG2), que ledit deuxième message de signalisation (SG2) a déjà été traité par le serveur d'application (AS) ;
- un module de transmission (TRM) dudit deuxième message.

12. Produit programme d'ordinateur comprenant des instructions pour mettre en œuvre les étapes du procédé de traitement selon l'une des revendications 1 à 7 ou d'un procédé de gestion selon l'une des revendications 8 ou 9, lorsqu'il est chargé et exécuté par un processeur.

13. Support d'informations lisible par un processeur de données, et comportant des instructions d'un programme pour l'exécution d'un procédé de traitement selon l'une des revendications 1 à 7 ou d'un procédé de gestion selon l'une des revendications 8 ou 9.

## Patentansprüche

1. Verarbeitungsverfahren bezüglich einer Kommunikation, das von einem Anwendungsserver (AS) umgesetzt wird, der dazu fähig ist, Signalisierungsnachrichten über eine erste Kommunikationsverbindung (L1), die zwischen dem Anwendungsserver (AS) und einem ersten Satz Vorrichtungen, die ein erstes Kernnetzwerk (CR1) bilden, hergestellt ist, zu senden und zu empfangen, **dadurch gekennzeichnet, dass** es die folgenden Schritte beinhaltet:
- Empfangen (E4), über die erste Kommunikationsverbindung (L1), einer ersten Signalisierungsnachricht (SG1);
- Erhalten (E6), in Abhängigkeit von der empfangenen ersten Signalisierungsnachricht (SG1), einer zweiten Signalisierungsnachricht (SG2), die eine Kennung eines Zielendgeräts (ID4) der zweiten Nachricht umfasst;
- Analysieren (E8), um in Abhängigkeit von der Zielendgerätkennung (ID4) zu bestimmen, ob das Zielendgerät mit einem zweiten Kernnetzwerk (CR2) einer vordefinierten Gruppe (G) von Kernnetzwerken verbunden ist, wobei sich das zweite Kernnetzwerk (CR2) von dem ersten Kernnetzwerk (CR1) unterscheidet;
- im Fall einer positiven Bestimmung, Einfügen einer Verarbeitungskennung in die zweite Nachricht, die angibt, dass mindestens ein Dienst, der zusammen mit einer Kennung eines Nutzers des Zielendgeräts in Dienstdaten aufgezeichnet ist, von dem Anwendungsserver berücksichtigt wurde, und Übertragen (E14) der zweiten Signalisierungsnachricht (ID4).

2. Verarbeitungsverfahren nach Anspruch 1, wobei die zweite Nachricht über eine zweite Kommunikationsverbindung (L2) übertragen wird, die zwischen dem Anwendungsserver (AS) und einem zweiten Satz Vorrichtungen, die das zweite Kernnetzwerk (CR2) bilden, hergestellt ist.

3. Verarbeitungsverfahren nach Anspruch 1, wobei die Zielendgerätkennung eine Kennung des zweiten Kernnetzwerks umfasst.

4. Verarbeitungsverfahren nach einem der vorhergehenden Ansprüche, wobei während des Schritts des Übertragens die zweite Signalisierungsnachricht an eine Vorrichtung des zweiten Satzes Vorrichtungen übertragen wird, wobei vorab eine Adresse der Vorrichtung zusammen mit der Zielendgerätkennung aufgezeichnet wird.

5. Verarbeitungsverfahren nach Anspruch 4, wobei die Adresse im Anschluss an das Empfangen einer Aufzeichnungsnachricht, die vorab durch das Zielendgerät übertragen wird, durch den Anwendungsserver aufgezeichnet wird.

6. Verarbeitungsverfahren nach einem der vorhergehenden Ansprüche, wobei die zweite Nachricht die erste Nachricht ist, in die die Verarbeitungskennung eingefügt ist.

7. Verarbeitungsverfahren nach einem der vorhergehenden Ansprüche, wobei die zweite Nachricht in Abhängigkeit von einer Endgerätkennung, die in der ersten Signalisierungsnachricht enthalten ist, und in Abhängigkeit von Dienstdaten, die vorab zusammen mit einer Nutzerkennung des Endgeräts aufgezeichnet werden, bestimmt wird.

8. Verfahren zur Verwaltung einer Signalisierungsnachricht bezüglich einer Kommunikation, das von einem Server (S-CSCF) eines Satzes Vorrichtungen, die ein zweites Kernnetzwerk (CR2) bilden, umgesetzt wird, **dadurch gekennzeichnet, dass** es die folgenden Schritte umfasst:
- Empfangen (E16) einer zweiten Signalisierungsnachricht (SG2), die Folgendes umfasst: eine Zielendgerätkennung (ID4) der Nachricht und eine Verarbeitungskennung, die angibt, dass mindestens ein Dienst, der zusammen mit einer Kennung eines Nutzers des Zielendgeräts in Dienstdaten aufgezeichnet ist, durch einen Anwendungsserver (AS) berücksichtigt wurde, wobei die zweite Nachricht durch den Anwendungsserver (AS) in Abhängigkeit von einer ersten Signalisierungsnachricht (SG1) erhalten wurde, welche der Anwendungsserver (AS) über eine erste Kommunikationsverbindung (L1), die zwischen dem Anwendungsserver (AS) und einem ersten Satz Vorrichtungen, die ein erstes Kernnetzwerk (CR1) bilden, hergestellt ist, empfangen hat;
- Bestimmen, dank der Verarbeitungskennung (TR), die in der zweiten Signalisierungsnachricht (SG2) enthalten ist, dass die zweite Signalisierungsnachricht (SG2) bereits durch den Anwendungsserver (AS) verarbeitet wurde;
- Übertragen (E18) der zweiten Nachricht (SG2) an das Zielendgerät.

9. Verwaltungsverfahren nach Anspruch 8, wobei die zweite Signalisierungsnachricht über eine zweite Kommunikationsverbindung (L2) empfangen wird, die zwischen dem Anwendungsserver (AS) und dem Server des zweiten Kernnetzwerks hergestellt ist.

10. Anwendungsserver (AS), der ein erstes Kommunikationsmodul (COM1) zum Senden und Empfangen von Signalisierungsnachrichten bezüglich einer Kommunikation zwischen zwei Nutzern über eine erste Kommunikationsverbindung, die zwischen dem Anwendungsserver und einem ersten Satz Vorrichtungen, die ein erstes Kernnetzwerk bilden, hergestellt ist, umfasst, **dadurch gekennzeichnet, dass** er Folgendes umfasst:
- ein Modul zum Erhalten (OBT), in Abhängigkeit von einer ersten Signalisierungsnachricht, die über die erste Kommunikationsverbindung empfangen wird, einer zweiten Signalisierungsnachricht, die eine Kennung eines Zielendgeräts der zweiten Nachricht umfasst;
- ein Modul zum Analysieren (ANL), um in Abhängigkeit von der Zielendgerätkennung zu bestimmen, ob das Zielendgerät mit einem zweiten Kernnetzwerk einer vordefinierten Gruppe von Kernnetzwerken verbunden ist, wobei sich das zweite Kernnetzwerk von dem ersten Kernnetzwerk unterscheidet;
- ein zweites Kommunikationsmodul (COM2) zum Übertragen, im Fall einer positiven Bestimmung, der zweiten Signalisierungsnachricht, in die eine Verarbeitungskennung eingefügt wurde, die angibt, dass mindestens ein Dienst, der zusammen mit einer Kennung eines Nutzers des Zielendgeräts in Dienstdaten aufgezeichnet ist, von dem Anwendungsserver berücksichtigt wurde.

11. Server (S-CSCF) eines Satzes Vorrichtungen, die ein zweites Kernnetzwerk (CR2) bilden, **dadurch gekennzeichnet, dass** er Folgendes umfasst:
- ein Modul zum Empfangen (REC) einer zweiten Signalisierungsnachricht bezüglich einer Kommunikation, die eine Zielendgerätkennung der Nachricht und eine Verarbeitungskennung, die angibt, dass mindestens ein Dienst, der zusammen mit einer Kennung eines Nutzers des Zielendgeräts in Dienstdaten aufgezeichnet ist, durch einen Anwendungsserver (AS) berücksichtigt wurde, umfasst, wobei die Nachricht durch den Anwendungsserver in Abhängigkeit von einer ersten Signalisierungsnachricht erhalten wurde, welche der Anwendungsserver über eine erste Kommunikationsverbindung, die zwischen dem Anwendungsserver und einem ersten Satz Vorrichtungen, die ein erstes Kernnetzwerk bilden, hergestellt ist, empfangen hat;
- ein Bestimmungsmodul, das dazu fähig ist, dank der Verarbeitungskennung (TR), die in der zweiten Signalisierungsnachricht (SG2) enthalten ist, zu bestimmen, ob die zweite Signalisierungsnachricht (SG2) bereits durch den Anwendungsserver (AS) verarbeitet wurde;
- ein Modul zum Übertragen (TRM) der zweiten Nachricht.

12. Computerprogrammprodukt, das Anweisungen zur Umsetzung der Schritte des Verarbeitungsverfahren nach einem der Ansprüche 1 bis 7 oder eines Verwaltungsverfahrens nach einem der Ansprüche 8 oder 9 beinhaltet, wenn es durch einen Prozessor geladen und ausgeführt wird.

13. Von einem Datenprozessor lesbarer Informationsträger, der Anweisungen eines Programms zur Ausführung eines Verarbeitungsverfahren nach einem der Ansprüche 1 bis 7 oder eines Verwaltungsverfahrens nach einem der Ansprüche 8 oder 9 umfasst.

## Claims

1. Processing method relating to communication, implemented by an application server (AS) able to send and to receive signalling messages via a first communication link (L1) established between said application server (AS) and a first set of devices forming a first core network (CR1), **characterized in that** it comprises the following steps:
- receiving (E4), via the first communication link (L1), a first signalling message (SG1);
- obtaining (E6), depending on said received first signalling message (SG1), a second signalling message (SG2) comprising an identifier (ID4) of a recipient terminal of said second message;
- analysing (E8) to determine, depending on said recipient terminal identifier (ID4), whether said recipient terminal is connected to a second core network (CR2) in a predefined group (G) of core networks, said second core network (CR2) being different from said first core network (CR1);
- in the event of positive determination, inserting, into the second message, a processing indicator signalling that at least one service recorded in service data in association with an identifier of a user of the recipient terminal has been taken into account by said application server and transmitting (E14) said signalling message (ID4) .

2. Processing method according to Claim 1, wherein the second message is transmitted via a second communication link (L2) established between said application server (AS) and a second set of devices forming said second core network (CR2).

3. Processing method according to Claim 1, wherein said recipient terminal identifier comprises an identifier of the second core network.

4. Processing method according to one of the preceding claims, wherein, during the transmission step, said second signalling message is transmitted to a device in said second set of devices, an address of said device previously being recorded in association with said recipient terminal identifier.

5. Processing method according to Claim 4, wherein said address is recorded by said application server following the reception of a registration message transmitted previously by said recipient terminal.

6. Processing method according to one of the preceding claims, wherein said second message is said first message, into which said processing indicator is inserted.

7. Processing method according to one of the preceding claims, wherein said second message is determined depending on a terminal identifier contained in said first signalling message and depending on service data previously recorded in association with a user identifier of said terminal.

8. Method for managing a signalling message relating to a communication, implemented by a server (S-CSCF) in a set of devices forming a second core network (CR2), **characterized in that** it comprises the following steps:
- receiving (E16) a second signalling message (SG2) comprising an identifier (ID4) of the recipient terminal of said message and a processing indicator signalling that at least one service recorded in service data in association with an identifier of a user of the recipient terminal has been taken into account by an application server (AS), said second message having been obtained by said application server (AS) depending on a first signalling message (SG1) received by said application server (AS) via a first communication link (L1) established between said application server (AS) and a first set of devices forming a first core network (CR1);
- determining, by virtue of said processing indicator (TR) contained in said second signalling message (SG2), that said second signalling message (SG2) has already been processed by the application server (AS);
- transmitting (E18) said second message (SG2) to said recipient terminal.

9. Management method according to Claim 8, wherein said second signalling message is received via a second communication link (L2) established between the application server (AS) and said server of the second core network.

10. Application server (AS) comprising a first communication module (COM1) for transmitting and receiving signalling messages relating to communication between two users, via a first communication link established between said application server and a first set of devices forming a first core network, **characterized in that** it comprises:
- a module (OBT) for obtaining, depending on a first signalling message received via the first communication link, a second signalling message comprising an identifier of a recipient terminal of said second message;
- an analysis module (ANL) for determining, depending on said recipient terminal identifier, whether said recipient terminal is connected to a second core network in a predefined group of core networks, said second core network being different from said first core network;
- a second communication module (COM2) for transmitting, in the event of positive determination, said second signalling message, into which a processing indicator signalling that at least one service recorded in service data in association with an identifier of a user of the recipient terminal has been taken into account by said application server has been inserted.

11. Server (S-CSCF) of a set of devices forming a second core network (CR2), **characterized in that** it comprises:
- a module (REC) for receiving a second signalling message relating to a communication and comprising an identifier of the recipient terminal of said message and a processing indicator signalling that at least one service recorded in service data in association with an identifier of a user of the recipient terminal has been taken into account by an application server (AS), said message having been obtained by said application server depending on a first signalling message received by said application server via a first communication link established between said application server and a first set of devices forming a first core network;
- a determination module able to determine, by virtue of said processing indicator (TR), contained in said second signalling message (SG2), that said second signalling message (SG2) has already been processed by the application server (AS);
- a module (TRM) for transmitting said second message.

12. Computer program product comprising instructions for implementing the steps of the Processing method according to one of Claims 1 to 7 or of a management method according to one of Claims 8 and 9, when it is loaded and executed by a processor.

13. Information medium which can be read by a data processor and comprises instructions of a program for executing a Processing method according to one of Claims 1 to 7 or a management method according to one of Claims 8 and 9.
